# EUROPÄISCHE PATENTSCHRIFT

(11) **EP 3 305 595 B1**
(45) Veröffentlichungstag und Bekanntmachung des Hinweises auf die Patenterteilung: **11.11.2020**
(21) Anmeldenummer: 17194109.9
(22) Anmeldetag: 29.09.2017
(51) Int. Cl.: B60Q 3/217, B60Q 3/54, B60Q 3/62

(54) **VERKLEIDUNGSVORRICHTUNG FÜR EINEN INNENRAUM EINES KRAFTFAHRZEUGS**
CLADDING FOR THE INTERIOR OF A MOTOR VEHICLE
DISPOSITIF DE REVÊTEMENT POUR UN HABITACLE D'UN VEHICULE AUTOMOBILE

(30) Priorität: 07.10.2016 DE 102016219521
(43) Veröffentlichungstag der Anmeldung: 11.04.2018
(73) Patentinhaber: AUDI AG, 85045 Ingolstadt (DE)
(72) Erfinder: Schmitz, Christoph, 93326 Abensberg (DE); Hottinger, Alexander, 85051 Ingolstadt (DE); van Tuijl, Mattijs, 85055 Ingolstadt (DE); Wu, Yunzhou, 85049 Ingolstadt (DE); Hupfer, Philip, 90559 Burgthann (DE); Heider, Christian, 93047 Regensburg (DE); Lehmann, Nadine, 85051 Ingolstadt (DE)

(56) Entgegenhaltungen:
- WO-A1-2011/154136
- FR-A1- 2 877 896
- FR-A1- 2 936 590
- JP-A- 2009 280 064

## Beschreibung

Die Erfindung betrifft eine Verkleidungsvorrichtung für einen Innenraum eines Kraftfahrzeugs, mit einer Verkleidungsfläche und mit zumindest einer Lichtquelle, welche an einem Rand der Verkleidungsfläche angeordnet ist, und durch welche die Verkleidungsfläche vom Rand her beleuchtbar ist.

Für Kraftfahrzeuge ist eine Vielzahl von Verkleidungsvorrichtungen für einen Innenraum, das sogenannte Interieur, bekannt. Oft sind derartige Verkleidungsvorrichtungen dabei mit einer Beleuchtungseinrichtung kombiniert, welche als sogenannte Ambientebeleuchtung oder indirekte Umfeldbeleuchtung einerseits eine Orientierung der Insassen im Kraftfahrzeug erleichtert und andererseits ein ansprechendes Erscheinungsbild des Kraftfahrzeugs im Innenraum erzeugt.

Die JP 2009 280064 A beschreibt ein Hilfsgriffbeleuchtungssystem für ein Fahrzeug, das einen Hilfsgriff beleuchtet, um einem Insassen die Position des Hilfsgriffs zu zeigen. Das Hilfsgriffbeleuchtungssystem umfasst ein dünnes Teil, das in einer Dachverkleidung ausgebildet ist, die um den Hilfsgriff des Fahrzeugs angeordnet ist. Eine Lichtquelle ist an der Rückseite des Teils installiert. Ein Lichtstrahl der Lichtquelle durchleuchtet das Teil, um so den Hilfsgriff zu beleuchten.

So offenbart beispielsweise die DE 10 2008 049 040 A1 eine Einrichtung zur Hinterleuchtung eines Interieurteils für ein Kraftfahrzeug, die indirekt durch einen für einen Bediener unsichtbaren Lichtleiter beleuchtet wird.

Aus der DE 20 2015 103 947 U1 ist eine Halterung für einen seitlich abstrahlenden Lichtleiter eines Fahrzeuginterieurteils bekannt, welche eine Lichtleiterfixieraufnahme mit einer seitlich offenen Einsatzöffnung aufweist.

Aus der EP 1 101 655 A2 ist wiederum eine Fahrzeuginnenraumbeleuchtung für eine von unten her erfolgende indirekte Beleuchtung des Dachhimmels eines Innenraums des Fahrzeugs offenbart, welche zur Verbesserung ihrer Anpassung an unterschiedliche Fahrzeugtypen einen langgestreckten, an seiner Unterseite lichtundurchlässigen Abdeckkörper offenbart, an welchem sich zum Dachhimmel hin wenigstens ein lichtdurchlässiger Seitenbereich anschließt, sodass durch den Seitenbereich hindurch das Licht einer zwischen dem Abdeckkörper und dem Dachhimmel angeordneten Lichtquelle gegen den Dachhimmel abgestrahlt wird, welcher somit seitlich beleuchtet wird.

Der vorliegenden Erfindung liegt die Aufgabe zugrunde, die Orientierung in einem Innenraum eines Kraftfahrzeugs zu verbessern und somit die Sicherheit im Straßenverkehr zu erhöhen.

Diese Aufgabe wird durch den Gegenstand des unabhängigen Patentanspruchs gelöst. Vorteilhafte Ausführungsformen ergeben sich aus den abhängigen Patentansprüchen, der Beschreibung und den Figuren.

Die Erfindung betrifft eine Verkleidungsvorrichtung für einen Innenraum oder ein Interieur eines Kraftfahrzeugs, welche eine Verkleidungsfläche und zumindest eine Lichtquelle aufweist. Die Lichtquelle kann dabei mit einem Lichtleiter zum Verteilen eines von der Lichtquelle erzeugten Lichtes ausgeführt sein. Insbesondere kann die Lichtquelle auch eine Lichterkette umfassen. Bevorzugt ist die zumindest eine Lichtquelle farbig und veränderlich ansteuerbar, sodass Licht unterschiedlicher Wellenlängen durch die Lichtquelle erzeugt werden kann. Die Lichtquelle ist dabei an einem Rand der Verkleidungsfläche angeordnet, sodass durch die Lichtquelle die Verkleidungsfläche zumindest bereichsweise vom Rand her, also seitlich, beleuchtbar ist. Die Lichtquelle kann dabei an dem Rand für einen Betrachter verdeckt unter einer Verkleidung oder einem Randelement angeordnet sein. Die Lichtquelle kann die Verkleidungsfläche damit bereichsweise oder vollständig vom Rand her seitlich beleuchten und damit eine indirekte Beleuchtung des Innenraums des Kraftfahrzeugs bereitstellen.

Wichtig ist, dass an der Verkleidungsfläche ein Verkleidungselement angebracht ist und zwar mittels eines zwischen Verkleidungsfläche und Verkleidungselement angeordneten Halteelements, insbesondere mittels eines vollständig zwischen Verkleidungsfläche und Verkleidungselement angeordneten Halteelements. Dabei ist ein Abstand zwischen dem Rand der Verkleidungsfläche, an welchem die Lichtquelle angeordnet ist, und dem Halteelement (und/oder zwischen der Lichtquelle und dem Halteelement) in einer Richtung parallel zu einer Haupterstreckungsebene der Verkleidungsfläche zumindest bereichsweise, also bereichsweise oder für das ganze Halteelement, größer als ein Abstand zwischen dem Rand der Verkleidungsfläche (und/oder der Lichtquelle) und dem Verkleidungselement in der Richtung parallel zu der Haupterstreckungsebene der Verkleidungsfläche. Das Halteelement ist somit vom Rand oder der Lichtquelle her betrachtet parallel zur Haupterstreckungsebene der Verkleidungsfläche zumindest bereichsweise, also bereichsweise oder ganz, relative zu dem Verkleidungselement zurückversetzt angeordnet. Es wird somit durch das Halteelement eine Fuge zwischen der Verkleidungsfläche und dem Verkleidungselement geschaffen. Der jeweilige Abstand kann dabei entlang einer durch den Innenraum verlaufenden Geraden gemessen werden. Beispielsweise kann so an einer Türinnenverkleidung eine Armauflage als Verkleidungselement mit minimalen Befestigungspunkten eines Halteelementes an einer Türinnenverkleidungsfläche als Verkleidungsfläche angebracht werden. Durch eine seitlich an der Türinnenverkleidungsfläche angeordnete Lichtquelle kann die Türinnenverkleidungsfläche so beleuchtet werden, dass die Armauflage als dann unbeleuchtetes beziehungsweise nicht leuchtendes Verkleidungselement vor der Verkleidungsfläche scheinbar schwebend hervortritt.

Es ergibt sich somit der Vorteil, dass das Verkleidungselement vor der beleuchtbaren Verkleidungsfläche bei einer aktivierten Lichtquelle optisch hervortritt und somit deutlicher in seiner Position wahrgenommen wird. Dabei wird durch die unterschiedlichen Abstände von Halteelement und Verkleidungselement zu dem Rand der Verkleidungsfläche beziehungsweise der Lichtquelle, also durch das zurückgesetzte Halteelement, welches in einer Fuge zwischen der Verkleidungsfläche und dem Verkleidungselement optisch verschwindet, ein Schwebeeffekt erzeugt. Das Verkleidungselement wird als vor der Verkleidungsfläche schwebend wahrgenommen, sodass die räumliche Relation zwischen Verkleidungsfläche und Verkleidungselement betont wird. Damit wird die Plastizität und Dreidimensionalität der Verkleidungsvorrichtung besser wahrnehmbar und entsprechend die Orientierung im Fahrzeug auf intuitive Weise verbessert. Durch eine verminderte Ablenkung des Fahrers wird somit auch eine Sicherheit im Straßenverkehr erhöht. Überdies kann so eine besonders ansprechende indirekte Ambientebeleuchtung in dem Kraftfahrzeug realisiert werden und es wird eine große gestalterische Freiheit realisiert.

Es ist vorgesehen, dass mehrere Lichtquellen umlaufend entlang des Randes der Verkleidungsfläche angeordnet sind. Insbesondere können die mehreren Lichtquellen dabei an zwei oder mehr unterschiedlich orientierten Randbereichen, also beispielsweise an unterschiedlichen Seiten der Verkleidungsfläche, angeordnet sein. Dies kann bei der Verwendung einer nicht erfindungsgemäßen einzigen Lichtquelle beispielsweise über einen entsprechend geformten Lichtleiter realisiert sein. Erfindungsgemäß sind die mehreren Lichtquellen an dem Rand umlaufend um die Verkleidungsfläche angeordnet.

Das hat den Vorteil, dass die Verkleidungsfläche aus mehreren Richtungen beleuchtbar ist, sodass auch das Verkleidungselement besonders deutlich vor der aus mehreren Richtungen beleuchteten Verkleidungsfläche hervortritt. Auch können so Abschattungseffekte durch das Halteelement verhindert werden, welche sonst Bereiche der Verkleidungsfläche nachteilig verdunkeln können, was eine Orientierung beziehungsweise ein Einordnen der Anordnung des Verkleidungselements relativ zur Verkehrsfläche beeinträchtigen kann.

In einer vorteilhaften Ausführungsform ist dabei vorgesehen, dass die Verkleidungsvorrichtung eine Türinnenverkleidungsvorrichtung ist und als Verkleidungsfläche eine Türinnenverkleidungsfläche umfasst. Insbesondere kann das Verkleidungselement dabei eine Armauflage aufweisen oder umfassen.

Das hat den Vorteil, dass die Verkleidungsfläche besonders groß ist und gerade ein Verkleidungselement auf dieser, welches naturgemäß in einem peripheren Sichtbereich der Fahrzeuginsassen angeordnet ist, betont dreidimensional erscheint. Selbst ein flüchtiger Blick aus dem Augenwinkel, bei welchem das entsprechende Verkleidungselement mit nur einem Auge wahrgenommen wird und bei welchem ein dreidimensionaler Eindruck somit nicht durch eine Stereowahrnehmung, sondern durch Kontextinformation der Umgebung erzeugt wird, führt so zu einer guten Orientierung mit einer korrekten Einschätzung der dreidimensionalen Struktur der Verkleidungsvorrichtung. Gerade für eine Türinnenverkleidungsvorrichtung sind somit die genannten Vorteile besonders günstig. Überdies sind gerade auch die Türen Komponenten im Innenraum des Kraftfahrzeugs, über welche dieser in großem Maß wird, sodass ein entsprechendes optisches ansprechendes Äußeres hier besonders zur Geltung kommt und ein großer Gestaltungsfreiraum besonders vorteilhaft ist.

In einer weiteren vorteilhaften Ausführungsform ist vorgesehen, dass ein weiterer Abstand zwischen dem Verkleidungselement und der Verkleidungsfläche senkrecht zu der Haupterstreckungsebene der Verkleidungsfläche größer als 0 und insbesondere kleiner als 25 Millimeter ist. Bevorzugt kann der Abstand auch kleiner als 10 Millimeter sein. Der weitere Abstand bestimmt also die Breite der Fuge zwischen Verkleidungsfläche und Verkleidungselement. Wie der oben beschriebene Abstand kann auch der weitere Abstand entlang einer durch den Innenraum, also nicht durch den von der Verkleidungsvorrichtung eingenommenen Raum, verlaufenden Geraden gemessen werden. Insbesondere ist der weitere Abstand zwischen der Verkleidungsfläche und einer Kante oder einem Eckbereich des Verkleidungselements gemessen, welche beziehungsweise welcher der Lichtquelle und/oder der Verkleidungsfläche am nächsten liegt oder am nächsten kommt. Die Kante oder der Eckbereich des Verkleidungselementes, von der aus der weitere Abstand gemessen wird, ist also die Kante oder der Bereich des Verkleidungselementes, welcher im Vergleich zu anderen Kanten oder Eckbereichen des Verkleidungselementes der Lichtquelle und/oder der Verkleidungsfläche am nächsten kommt. Insbesondere kann die Kante beziehungsweise der Eckbereich dabei parallel zu der Haupterstreckungsebene der Verkleidungsfläche oder der Verkleidungsfläche selbst verlaufen.

Die Beabstandung des Verkleidungselementes und der Verkleidungsfläche hat zur Folge, dass die Fuge zwischen Verkleidungselement und Verkleidungsfläche eine Lichtfalle bildet, sodass das Verkleidungselement optisch besonders deutlich von der Verkleidungsfläche abgesetzt ist. Dadurch wird erneut die dreidimensionale Wahrnehmung der Verkleidungsvorrichtung erleichtert und die Orientierung im Innenraum verbessert. Auch ein ansprechendes Äußeres kann so bei großer gestalterischer Freiheit erreicht werden. Durch die geringen Spaltmaße von weniger als 25 beziehungsweise weniger als 10 Millimeter wird erreicht, dass ein Einbringen von Fingern oder ähnlichem in den Spalt oder in die Fuge verhindert wird, was eine Verletzungsgefahr reduziert. Gleichzeitig bleibt der Spalt optisch gut wahrnehmbar.

In einer anderen vorteilhaften Ausführungsform ist vorgesehen, dass das Halteelement eine lichtabsorbierende oder reflexionsarme Oberfläche aufweist, insbesondere eine mattschwarze Oberfläche.

Das hat den Vorteil, dass eine Reflexion des Lichtes der Lichtquelle an dem Halteelement minimiert beziehungsweise unterbunden wird und der optische Kontrast zwischen dem Verkleidungselement und der Verkleidungsfläche beziehungsweise dem Spalt oder der Fuge besonders deutlich wird. Damit ist der genannte Schwebeeffekt in einfacher Weise nochmals verstärkt.

In einer besonders bevorzugten Ausführungsform ist vorgesehen, dass die Verkleidungsfläche konkav ist. Die Haupterstreckungsebene der Verkleidungsfläche kann entsprechend als eine Ebene mit einer minimalen Abweichung von der Verkleidungsfläche bestimmt werden.

Das hat den Vorteil, dass die Verkleidungsfläche besonders gut beleuchtbar ist und überdies der Innenraum des Kraftfahrzeugs vergrößert wird. Dadurch kann bei einer vorgegebenen Anordnung des Verkleidungselements relativ zur Verkleidungsvorrichtung der weitere Abstand zwischen Verkleidungselement und Verkleidungsfläche auch frei eingestellt werden, beispielsweise vergrößert werden. Dies verstärkt den dreidimensionalen Effekt und kann so zur verbesserten Orientierung im Innenraum genutzt werden.

In einer vorteilhaften weiteren Ausführungsform ist vorgesehen, dass an dem Rand der Verkleidungsfläche ein aus der Haupterstreckungsebene der Verkleidungsfläche hervorspringendes Randelement angeordnet ist und die Lichtquelle an dem Randelement angeordnet ist.

Das hat den Vorteil, dass einerseits durch die Lichtquelle die Verkleidungsfläche von der Seite her besonders gut beleuchtbar ist und andererseits das Halteelement so durch das vorspringende Randelement verhindert wird, dass ein Betrachter in dem Innenraum des Kraftfahrzeugs in die Fuge blicken kann. Damit ist das Halteelement vor dem Betrachter unsichtbar ausgeführt. Dies verstärkt den oben genannten Schwebeeffekt und verbessert so weiter die Orientierung in dem Innenraum sowie die optische Qualität der Verkleidungsvorrichtung.

Dabei kann insbesondere vorgesehen sein, dass eine geradlinige Tangente an dem Randelement, welche durch eine Grenze zwischen dem Halteelement und der Verkleidungsfläche verläuft, auch durch das Verkleidungselement hindurch verläuft. Dies kann insbesondere stets, also für jede geradlinige Tangente, der Fall sein. Damit springt das Randelement so weit hervor, dass für einen Betrachter der Verkleidungsfläche im Innenraum beziehungsweise in einem größeren Abstand von der Verkleidungsfläche als die Erstreckung des Randelements senkrecht zur Haupterstreckungsrichtung der Verkleidungsfläche das Halteelement nicht sichtbar oder unsichtbar ist. Die Tangente kann dabei in einer Hochrichtung verlaufen, also einer Richtung, welche bei einem bestimmungsgemäßen Einsatz in einem Kraftfahrzeug der Fahrzeughochrichtung des Kraftfahrzeugs entspricht.

Das hat den Vorteil, dass so sichergestellt ist, dass das Halteelement unsichtbar für einen Betrachter ist. Damit wird der eingangs beschriebene Schwebeeffekt mit seinen positiven Folgen für die Orientierung im Innenraum und der Sicherheit im Straßenverkehr sowie dem ansprechenden Ambiente und der erhöhten gestalterischen Freiheit weiter verstärkt.

In einer besonders vorteilhaften Ausführungsform kann vorgesehen sein, dass an dem Halteelement eine weitere Lichtquelle zur seitlichen Beleuchtung der Verkleidungsfläche angeordnet ist. Das Halteelement kann dabei die weitere Lichtquelle aufweisen.

Das hat den Vorteil, dass die Verkleidungsfläche gerade im Bereich der Fuge hinter dem Verkleidungselement bei aktiver weiterer Lichtquelle gut sichtbar ist und das Verkleidungselement, gerade wenn es nicht selbstleuchtend ausgeführt ist, besonders deutlich vor der Verkleidungsfläche hervortritt. Auch dies verstärkt so den eingangs erwähnten Schwebeeffekt und damit die bessere Orientierung im Innenraum des Kraftfahrzeugs. Auch kann so ein besonders ansprechendes optisches Äußeres erreicht werden, indem, wie in den anderen beschriebenen Ausführungsformen, die gestalterische Freiheit einhergehend mit der verbesserten Sicherheit im Straßenverkehr erhöht wird.

Die Erfindung betrifft auch ein Kraftfahrzeug mit einer Verkleidungsvorrichtung nach einer der beschriebenen Ausführungsformen.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Ausführungsbeispiele der Erfindung werden nachfolgend anhand schematischer Zeichnungen näher erläutert. Dabei zeigen:
- Fig. 1: eine schematische Schnittdarstellung einer beispielhaften Ausführungsform einer Verkleidungsvorrichtung; und
- Fig. 2: ein Kraftfahrzeug mit einer beispielhaften Ausführungsform einer Verkleidungsvorrichtung.

In den Figuren werden gleiche oder funktionsgleiche Elemente mit den gleichen Bezugszeichen versehen.

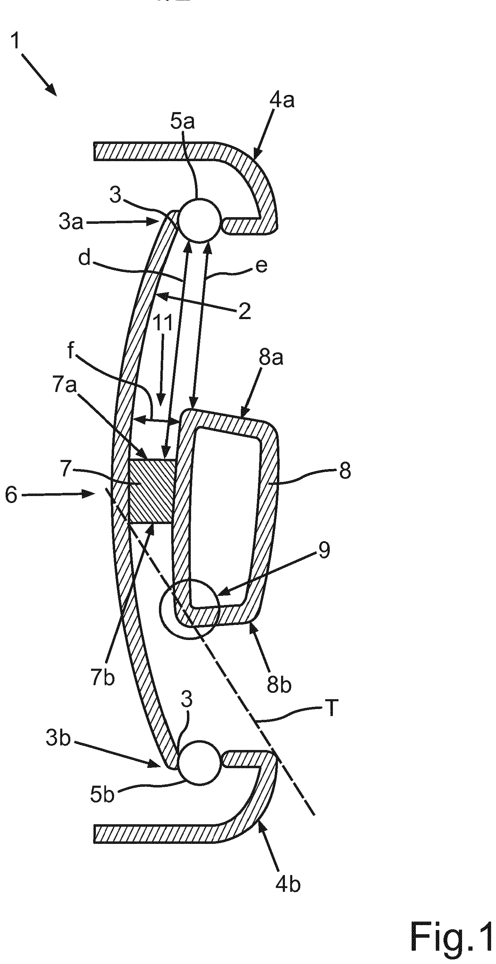

In Fig. 1 ist eine beispielhafte Ausführungsform einer Verkleidungsvorrichtung 1 in einer schematischen Schnittdarstellung gezeigt. Die Schnittachse verläuft vorliegend senkrecht zu einer Haupterstreckungsebene einer Verkleidungsfläche 2 in y-Richtung in einer Hochrichtung der Verkleidungsvorrichtung 1, welche in einem eingebauten Zustand einer Fahrzeughochrichtung entspricht. Die Verkleidungsfläche 2 ist dabei vorliegend konkav ausgeführt und mit einem Rand 3 ausgeführt. Die Verkleidungsfläche 2 weist in der Hochrichtung sowohl an einem oberen Rand 3a als auch an einem unteren Rand 3b jeweils ein aus der Haupterstreckungsebene der Verkleidungsfläche 2 hervorspringendes oberes Randelement 4a sowie ein entsprechendes unteres Randelement 4b auf. In dem gezeigten Beispiel ist an dem jeweiligen oberen und unteren Rand 3a, 3b in dem oberen beziehungsweise unteren Randelement 4a, 4b eine jeweilige obere Lichtquelle 5a und untere Lichtquelle 5b angeordnet. Mit diesen beiden Lichtquellen 5a, 5b ist die Verkleidungsfläche 2 vorliegend vom oberen Rand 3a und vom unteren Rand 3b aus beleuchtbar.

An einem Mittelbereich 6 der Verkleidungsfläche 2 ist vorliegend ein Halteelement 7 angeordnet, mittels welchem ein Verkleidungselement 8, welches im gezeigten Beispiel als Armstütze ausgeführt ist, an der Verkleidungsfläche 2 angeordnet oder befestigt ist. In der y-Richtung betrachtet ist das Halteelement 7 vorliegend schmaler ausgeführt als das Verkleidungselement 8, und eine entsprechende obere Oberfläche 7a und untere Oberfläche 7b des Halteelements 7 entsprechend im Vergleich zu einer oberen Oberfläche 8a beziehungsweise unteren Oberfläche 8b des Verkleidungselements 8 in negativer beziehungsweise positiver y-Richtung zurückversetzt. Entsprechend ist damit ein Abstand d zwischen dem Rand 3 der Verkleidungsfläche 2, oder vorliegend der oberen Lichtquelle 5a und der oberen Oberfläche 7a des Halteelements 7 größer als ein Abstand e zwischen dem Rand der Verkleidungsfläche 3 oder vorliegend der an dem Rand 3 der Verkleidungsfläche 2 angeordneten oberen Lichtquelle 5a und der oberen Seite oder Oberfläche 8a des Verkleidungselements 8. Analoges gilt vorliegend mutatis mutandis für die unteren Oberflächen 7b, 8b von Halteelement 7 und Verkleidungselement 8. Damit wird eine Fuge 11 zwischen dem Verkleidungselement 8 und der Verkleidungsfläche 2 gebildet. Dabei ist ein weiterer Abstand f senkrecht zur Haupterstreckungsebene der Verkleidungsfläche 2, also vorliegend in x-Richtung, zwischen der Verkleidungsfläche 2 und dem Verkleidungselement von 0 verschieden mit weniger als 25 Millimetern, beispielsweise mit 15 Millimetern ausgeführt. Der Abstand f kann auch weniger als 10 Millimeter betragen.

Bei einer aktivierten Lichtquelle 5a, 5b erscheint somit das Verkleidungselement 8 durch die Fuge 11 abgesetzt vor der beleuchteten Verkleidungsfläche 2 als schwebend und wird somit in optisch ansprechender Weise besonders deutlich in seiner Position vor der Verkleidungsfläche 2 wahrgenommen.

Für das untere Randelement 4b ist vorliegend auch eine geradlinige Tangente T eingezeichnet, welche an einem sich der Verkleidungsfläche 2 anschließenden Fußbereich des Halteelements 6 durch eine Grenze zwischen dem Halteelement 6 und der Verkleidungsfläche 2 verläuft. Diese Tangente verläuft in einem Bereich 9 auch durch das Verkleidungselement 8. Entsprechend kann ein Beobachter das Halteelement 6 nie sehen, da dieses immer durch das Verkleidungselement 8 oder das Randelement 4b verdeckt ist. Dies dient in besonderer Weise dem genannten Schwebeeffekt. Vorliegend verläuft die Tangente T dabei in der Zeichenebene senkrecht zur Haupterstreckungsebene der Verkleidungsfläche 2. Für die gezeigte Anordnung ist jede geradlinige Tangente T an dem unteren Randelement 4b, aber mutatis mutandis auch an dem oberen Randelement 4a, welche entsprechend durch eine Grenze zwischen Halteelement 7 und Verkleidungsfläche 2 verläuft, auch durch das Verkleidungselement 8 verlaufend. Damit wird der gewünschte Effekt aus jeder im Innenraum des Kraftfahrzeug durch einen Betrachter einnehmbaren Perspektive unsichtbaren Halteelements 7 sichergestellt.

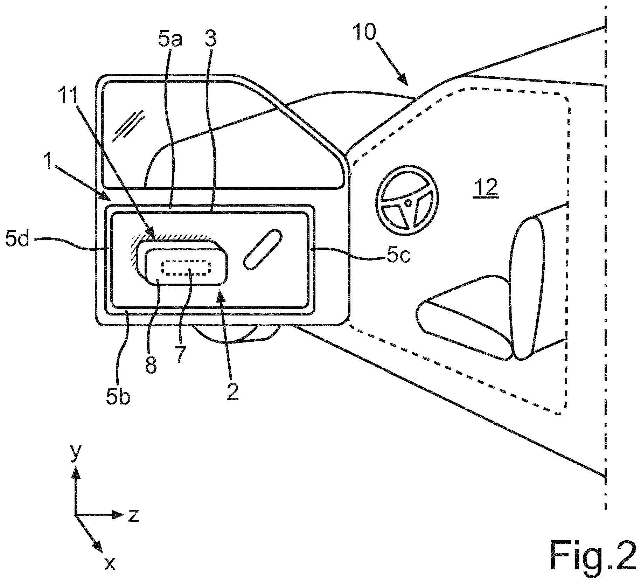

In Fig. 2 ist nun eine beispielhafte Ausführungsform einer Verkleidungsvorrichtung 1 in einem Kraftfahrzeug 10 gezeigt. Vorliegend handelt es sich bei der Verkleidungsvorrichtung 1 um eine Türinnenverkleidungsvorrichtung des Kraftfahrzeugs 10. Das Verkleidungselement 8 ist dabei im gezeigten Beispiel als Armlehne ausgeführt. Das Halteelement 7 ist vorliegend nur gestrichelt angezeigt, da es zwischen dem Verkleidungselement 8 und der Verkleidungsfläche 2, also aus der gezeigten Perspektive unsichtbar angeordnet ist. In dem gezeigten Beispiel weist die Verkleidungsvorrichtung 1 nicht nur eine obere und eine untere Lichtquelle 5a, 5b auf, sondern auch eine vordere Lichtquelle 5c sowie eine hintere Lichtquelle 5d. Diese Lichtquellen 5a bis 5d sind hier umlaufend an dem Rand 3 der Verkleidungsfläche 2 angeordnet. Damit wird ein entsprechendes Licht aus mehreren Richtungen auf die Verkleidungsfläche 2 abgestrahlt und das Verkleidungselement 8 tritt besonders deutlich vor der Verkleidungsfläche 2 hervor, da in der von Verkleidungsfläche 2 und Verkleidungselement 8 gebildeten Fuge 11 das Licht absorbiert wird.

In einer weiteren Variante könnte hier beispielsweise vorgesehen sein, dass zumindest eine zusätzliche Lichtquelle in oder an dem Halteelement 7 angeordnet ist und so der Spalt oder die Fuge 11 nicht das Verkleidungselement 8 als besonders dunkle Umrandung, sondern vielmehr als beleuchtete Fuge 11 und besonders helle Umrandung in den Vordergrund treten lässt, um die Orientierung in einem Innenraum 12 des Kraftfahrzeugs 10 zu erhöhen.

## Patentansprüche

1. Verkleidungsvorrichtung (1) für einen Innenraum (12) eines Kraftfahrzeugs (10), mit einer Verkleidungsfläche (2) und mit zumindest einer Lichtquelle (5a, 5b, 5c, 5d), welche an einem Rand (3) der Verkleidungsfläche (2) angeordnet ist, und durch welche die Verkleidungsfläche (2) vom Rand (3) her beleuchtbar ist, wobei
- an der Verkleidungsfläche (2) ein Verkleidungselement (8) angebracht ist, und zwar mittels eines zwischen Verkleidungsfläche (2) und Verkleidungselement (8) angeordneten Halteelements (7),
- ein Abstand (d) zwischen dem Rand (3) der Verkleidungsfläche (2) und dem Halteelement (7) parallel zu einer Haupterstreckungsebene der Verkleidungsfläche (2) zumindest bereichsweise größer ist als ein Abstand (e) zwischen dem Rand (3) der Verkleidungsfläche (2) und dem Verkleidungselement (8) parallel zu der Haupterstreckungsebene der Verkleidungsfläche (2), **dadurch gekennzeichnet, dass**
- mehrere Lichtquellen (5a, 5b, 5c, 5d) umlaufend entlang des Randes (3) der Verkleidungsfläche (2) angeordnet sind, mit denen Licht aus mehreren Richtungen auf die Verkleidungsfläche (2) abstrahlbar ist.

2. Verkleidungsvorrichtung (1) nach Anspruch 1,
**dadurch gekennzeichnet, dass** die Verkleidungsvorrichtung (1) eine Türinnenverkleidungsvorrichtung ist.

3. Verkleidungsvorrichtung (1) nach einem der vorhergehenden Ansprüche,
**dadurch gekennzeichnet, dass**
ein weiterer Abstand (f) zwischen dem Verkleidungselement (8) und der Verkleidungsfläche (2) senkrecht zu der Haupterstreckungsebene der Verkleidungsfläche (2) größer als Null und insbesondere geringer als 25mm ist.

4. Verkleidungsvorrichtung (1) nach einem der vorhergehenden Ansprüche,
**dadurch gekennzeichnet, dass**
das Halteelement (7) eine lichtabsorbierende Oberfläche aufweist, insbesondere eine mattschwarze Oberfläche.

5. Verkleidungsvorrichtung (1) nach einem der vorhergehenden Ansprüche, **dadurch gekennzeichnet, dass**
die Verkleidungsfläche (2) konkav ist.

6. Verkleidungsvorrichtung (1) nach einem der vorhergehenden Ansprüche,
**dadurch gekennzeichnet, dass**
an dem Rand (3) der Verkleidungsfläche (2) ein aus der Haupterstreckungsebene der Verkleidungsfläche (2) hervorspringendes Randelement (4a, 4b) angeordnet ist, und die Lichtquelle (5a, 5b, 5c, 5d) an dem Randelement (4a, 4b) angeordnet ist.

7. Verkleidungsvorrichtung (1) nach Anspruch 6,
**dadurch gekennzeichnet, dass**
eine geradlinige Tangente (T) an dem Randelement (4a, 4b), welche durch eine Grenze zwischen Halteelement (7) und Verkleidungsfläche (2) verläuft, auch durch das Verkleidungselement (8) verläuft.

8. Verkleidungsvorrichtung (1) nach einem der vorhergehenden Ansprüche,
**dadurch gekennzeichnet, dass**
an dem Halteelement (7) eine weitere Lichtquelle zur Beleuchtung der Verkleidungsfläche (2) angeordnet ist.

9. Kraftfahrzeug (10) mit einer Verkleidungsvorrichtung (1) nach einem der vorhergehenden Ansprüche.

## Claims

1. Cladding (1) for an interior (12) of a motor vehicle (10), with a cladding surface (2) and with at least one light source (5a, 5b, 5c, 5d), which is arranged at an edge (3) of the cladding surface (2), and by means of which the cladding surface (2) can be illuminated from the edge (3), wherein,
- a cladding element (8) is mounted on the cladding surface (2), namely by means of a retaining element (7) arranged between the cladding surface (2) and the cladding element (8),
- a distance (d) between the edge (3) of the cladding surface (2) and the retaining element (7) parallel to amain extension plane of the cladding surface (2) is greater, at least in some places, than the distance (e) between the edge (3) of the cladding surface (2) and the cladding element (8) parallel to the main extension plane of the cladding surface (2), **characterised in that**
- several light sources (5a, 5b, 5c, 5d) are arranged peripherally along the edge (3) of the cladding surface (2), with which light can be radiated from several directions onto the cladding surface (2).

2. Cladding (1) according to claim 1, **characterised in that** the cladding (1) is interior door cladding

3. Cladding (1) according to any of the preceding claims, **characterised in that** a further distance (f) between the cladding element (8) and the cladding surface (2) perpendicular to the main extension plane of the cladding surface (2) is greater than zero and, in particular, less than 25mm.

4. Cladding (1) according to any of the preceding claims, **characterised in that** the retaining element (7) has a light absorbing surface, in particular a matt black surface.

5. Cladding (1) according to any of the preceding claims, **characterised in that** the cladding surface (2) is concave.

6. Cladding (1) according to any of the preceding claims, **characterised in that** an edge element (4a, 4b) protruding from the main extension plane of the cladding surface (2) is arranged at the edge (3) of the cladding surface (2), and the light source (5a, 5b, 5c, 5d) is arranged at the edge element (4a, 4b).

7. Cladding (1) according to claim 6, **characterised in that** a straight line tangent (T) to the edge element (4a, 4b), which passes through a boundary between the retaining element (7) and the cladding surface (2), also passes through the cladding element (8).

8. Cladding (1) according to any of the preceding claims, **characterised in that** a further light source for illuminating the cladding surface (2) is arranged at the retaining element (7).

9. Motor vehicle (10) with cladding (1) according to any of the preceding claims.

## Revendications

1. Dispositif d'habillage (1) pour un habitacle (12) d'un véhicule automobile (10), avec une surface d'habillage (2) et avec au moins une source de lumière (5a, 5b, 5c, 5d), laquelle est agencée à un bord (3) de la surface d'habillage (2), et par laquelle la surface d'habillage (2) peut être éclairée depuis le bord (3), dans lequel
- un élément d'habillage (8) est monté au niveau de la surface d'habillage (2), et ce au moyen d'un élément de retenue (7) agencé entre la surface d'habillage (2) et l'élément d'habillage (8),
- une distance (d) entre le bord (3) de la surface d'habillage (2) et l'élément de retenue (7) parallèlement à un plan d'extension principal de la surface d'habillage (2) est supérieure au moins par zone à une distance (e) entre le bord (3) de la surface d'habillage (2) et l'élément d'habillage (8) parallèlement au plan d'extension principal de la surface d'habillage (2), **caractérisé en ce que**
- plusieurs sources de lumière (5a, 5b, 5c, 5d) sont agencées circonférentiellement le long du bord (3) de la surface d'habillage (2), avec lesquelles la lumière peut être émise depuis plusieurs directions sur la surface d'habillage (2).

2. Dispositif d'habillage (1) selon la revendication 1,
**caractérisé en ce que** le dispositif d'habillage (1) est un dispositif d'habillage d'intérieur de porte.

3. Dispositif d'habillage (1) selon l'une quelconque des revendications précédentes,
**caractérisé en ce que**
une autre distance (f) entre l'élément d'habillage (8) et la surface d'habillage (2) perpendiculairement au plan d'extension principal de la surface d'habillage (2) est supérieure à zéro et en particulier est inférieure à 25 mm.

4. Dispositif d'habillage (1) selon l'une quelconque des revendications précédentes,
**caractérisé en ce que**
l'élément de retenue (7) présente une surface absorbant la lumière, en particulier une surface noir mat.

5. Dispositif d'habillage (1) selon l'une quelconque des revendications précédentes, **caractérisé en ce que**
la surface d'habillage (2) est concave.

6. Dispositif d'habillage (1) selon l'une quelconque des revendications précédentes,
**caractérisé en ce que**
un élément de bord (4a, 4b) faisant saillie du plan d'extension principal de la surface d'habillage (2) est agencé au bord (3) de la surface d'habillage (2), et la source de lumière (5a, 5b, 5c, 5d) est agencée au niveau de l'élément de bord (4a, 4b).

7. Dispositif d'habillage (1) selon la revendication 6,
**caractérisé en ce que**
une tangente rectiligne (T) au niveau de l'élément de bord (4a, 4b), laquelle s'étend par une limite entre l'élément de retenue (7) et la surface d'habillage (2), s'étend aussi par l'élément d'habillage (8).

8. Dispositif d'habillage (1) selon l'une quelconque des revendications précédentes,
**caractérisé en ce que**
une autre source de lumière pour l'éclairage de la surface d'habillage (2) est agencée au niveau de l'élément de retenue (7).

9. Véhicule automobile (10) avec un dispositif d'habillage (1) selon l'une quelconque des revendications précédentes.
